**Europäisches Patentamt**

**European Patent Office**

**Office européen des brevets**

(19)

(11) Veröffentlichungsnummer : **0 425 586 B1**

(12)

# EUROPÄISCHE PATENTSCHRIFT

(45) Veröffentlichungstag der Patentschrift :
**01.09.93 Patentblatt 93/35**

(51) Int. Cl.⁵ : **C04B 24/26,** C04B 38/00,
E01B 19/00

(21) Anmeldenummer : **89912947.2**

(22) Anmeldetag : **01.12.89**

(86) Internationale Anmeldenummer :
**PCT/AT89/00114**

(87) Internationale Veröffentlichungsnummer :
**WO 90/06290 14.06.90 Gazette 90/14**

(54) **MISCHUNG ZUR HERSTELLUNG EINER LÄRMSCHUTZMASSE FÜR GLEISANLAGEN.**

(30) Priorität : **02.12.88 AT 2960/88**

(43) Veröffentlichungstag der Anmeldung :
**08.05.91 Patentblatt 91/19**

(45) Bekanntmachung des Hinweises auf die
Patenterteilung :
**01.09.93 Patentblatt 93/35**

(84) Benannte Vertragsstaaten :
**AT CH DE FR IT LI**

(56) Entgegenhaltungen :
**EP-A- 0 180 118**
**EP-A- 0 256 144**
**DE-A- 3 527 829**
**DE-C- 815 925**
**FR-A- 2 125 747**

(73) Patentinhaber : **ALLGEMEINE
BAUGESELLSCHAFT - A. PORR
AKTIENGESELLSCHAFT
Rennweg 12
A-1031 Wien (AT)**

(72) Erfinder : **HOWANIETZ, Friedrich
Bahnstrasse 3
A-2261 Angern/March (AT)**
Erfinder : **HINTERHOFER, Otto
Nikolaus Dörygasse 10
A-3400 Klosterneuburg (AT)**
Erfinder : **FERRARI-BRUNNENFELD, Mario
Hauptstrasse 227
A-9201 Krumpendorf (AT)**

(74) Vertreter : **Pfeifer, Otto, Dipl.-Ing. et al
Patentanwälte Schütz und Partner
Fleischmanngasse 9
A-1040 Wien (AT)**

**Beschreibung**

Gegenstand der vorliegenden Erfindung ist eine Mischung zur Herstellung einer Lärmschutzmasse für Gleisanlagen.

Verfahren und Maßnahmen zur Reduktion der Lärmbelastung sind zahlreich. Sie betreffen im Wohnbereich die Tritt- und Körperschalldämmung, im Außenbereich Lärmschutzwände und besonders aufgebaute Asphalte und reichen bis zur elastischen Lagerung von vibrierenden Maschinen.

Sehr störend ist der Verkehrslärm von Eisenbahnen im Kurven- und Brückenbereich sowie auf offener Strecke. Die Methoden zur Lärmbekämpfung beschränken sich zur Zeit auf elastische Lagerung der Gleise, Errichten von Schallschutzmauern und Auflegen von Folien im Dammbereich, die größtenteils mit all den Schwächen, wie Verspröden der thermoplastischen Unterlagsplatten bei Tieftemperatur, Schneeverwehungen im Bereich der Lärmschutzwände, Losreißen und Flattern bei Windbelastung, verbunden sind.

Bedingt durch den relativ hohen E-Modul der Materialien der Unterlagsplatten und Folien, noch dazu veränderlich durch Temperatureinflüsse, sind die Schutzmaßnahmen recht unbefriedigend.

Ziel der vorliegenden Erfindung ist es, diese Nachteile zu vermeiden und für Gleisanlagen Lärmschutzmassen zur Verfügung zu stellen, die die als besonders störend empfundenen Schallfrequenzen wirksam dämpfen oder überhaupt herausfiltern und zudem noch unempfindlich gegen Temperaturschwankungen, insbesondere gegen tiefe Temperaturen, sind.

Dieses Ziel wird erfindungsgemäß mit einer Mischung erreicht, die aus folgenden Komponenten besteht:

a) einer wässerigen Dispersion eines Kunststoffes mit folgenden Eingenschaften des Kunststoffilms:
- $T_{\lambda,max} \leq$ -50°C, bestimmt nach DIN 53445
- Reißdehnung in Anlehnung an DIN 53 455 (mit Probekörper der Dimensionen 50 x 10 x 2 mm und 10 mm Einspannlänge, Prüfgeschwindigkeit 100 mm/min)
  bei + 23°C mindestens ca. 4.000 % ($\pm$ 15 Rel %)
  bei - 20°C mindestens ca. 1.600 % ($\pm$ 15 Rel %),
  in einer Mischung von 1:1 Gewichtsteilen einer etwa 58 gew.-%igen Dispersion mit Österreichischem Einheitszement PZ 375
  bei + 23°C mindestens 225 % ($\pm$ 15 Rel %)
  bei - 20°C mindestens 165 % ($\pm$ 15 Rel %)
- Restdehnung an Prüfkörpern 3 nach DIN 53 455 nach Dehnung auf 50 % der ursprünglichen Reißdehnung über eine Dauer von einer Stunde und anschließender Entlastung
  bei +23°C
  1 Stunde nach Entlastung mindestens 1000 % ($\pm$ 15 Rel %)
  24 Stunden nach Entlastung mindestens 940 % ($\pm$ 15 Rel %),
  bei - 20°C
  1 Stunde nach Entlastung mindestens 290 % ($\pm$ 15 Rel %)
  24 Stunden nach Entlastung mindestens 180 % ($\pm$ 15 Rel %),
  in einer Mischung von 1:1 Gewichtsteilen einer etwa 58 gew.-%igen Dispersion mit Österreichischem Einheitszement PZ 375
  bei +23°C
  1 Stunde nach Entlastung mindestens 24 % ($\pm$ 15 Rel %)
  24 Stunden nach Entlastung mindestens 22 % ($\pm$ 15 Rel %),
  bei -20°C
  1 Stunde nach Entlastung mindestens 35 % ($\pm$ 15 Rel %)
  24 Stunden nach Entlastung mindestens 23 % ($\pm$ 15 Rel %),

b) Zement in einer Menge, bezogen auf die Trockenmasse der Kunststoffdispersion, von 1:1 bis 5:1 Gewichtsteilen,

c) einem inerten Zuschlag mit Korngrößen über 4 mm in einer Menge, daß bei Vermischung der Komponenten a - c ein Hohlraumgehalt von mindestens 12, vorzugsweise über 20 Volumsteilen entsteht,

d) gegebenenfalls inerten Füllern mit einer Korngröße von maximal 1,5 mm und

e) gegebenenfalls Thixotropierhilfen an sich bekannter Art.

In der Folge wird die Summe aus Kunststoffdispersion und Zement, gegebenenfalls mit Füller und Thixotropierhilfen, als Bindemittel bezeichnet.

Die Kunststoffe, die erfindungsgemäß eingesetzt werden, zeigen ein ausgeprägtes plastoelastisches Verhalten und bilden zwischen den Körnern des Zuschlages eine Verbindung, die man als dauerhaftes Gelenk bezeichnen kann. Die Mischungen bleiben nach der Erhärtung des Bindemittels in einem zähteigigen Zustand: Eindrücke unter Belastung werden nur teilsweise rückverformt. Die Kunststoffe werden in Form wässeriger Dispersionen eingesetzt.

Das durch unterschiedliche Zementmenge und die gegebenenfalls zugesetzten Füller steuerbare thixotrope Verhalten ermöglicht unterschiedliche Schichtdicken am Zuschlagkorn. Aber auch das plastoelastische Verhalten ist variabel durch Veränderungen des Verhältnisses der Mengen von Kunststoff, Zement und gegebenenfalls Füller zueinander. Die bevorzugten Zementmengen liegen, bezogen auf die Trockenmasse der Kunststoffdisperion, bei 1,5 : 1 bis 2 : 1 Gewichtsteilen.

Als Zuschläge eignen sich sämtliche Materialen, wie sie auch für Beton verwendet werden, wie Gummigranulat, Blähschiefer, Blähton etc. Die Kornzusammensetzung ist keine stetige Sieblinie. Es fehlt immer die Kornfraktion 0/4 mm. Somit werden nur Fraktionen 4/8, 8/16, 16/32 mm, entweder als Einzelfraktion oder in Mischungen verwendet. Entscheidend ist ein verbleibender Hohlraumgehalt von mehr als 12, vorzugsweise mehr als 20 Volumsteilen, in der fertigen abgebundenen Masse.

Als gegebenenfalls zugesetzte Füller mit der Korngröße maximal, 1,5 mm dienen handelsübliche Stoffe,wie Quarz oder Kalkstein, Gesteinsmehl, Feinsand u. dgl.

Das ausgehärtete Endprodukt unterscheidet sich wesentlich von allen anderen bekannten Systemen, die zur Lärmdämmung eingesetzt werden und in mechanischer Hinsicht entweder härter sind oder nach einer Belastung rückverformen. Der erfindungsgemäße Effekt der schon bei relativ geringer Belastung teilweise bleibenden plastischen Verformung wird durch die Art des Kunststoffes bewirkt.

Das Bindemittel wird bei der Herstellung der Lärmschutzmassen zuerst vorgemischt und anschließend mit den Zuschlägen versetzt. Durch die zähe Konsistenz wird jedes Einzelkorn mit Bindemitteln umhüllt und Korn an Korn verklebt.

Das Gemisch wird maschinell oder händisch aufgebracht, wobei die Bindemitteldicken über jedem Korn je nach Grad der Thixotropierung 200 bis 1000 µm betragen. Die dauerklebrigen Eingenschaften der Kunststoffkomponente ermöglichen sofort nach dem Mischen ein aktives Verbinden von Korn zu Korn, aber auch das Anhaften am jeweiligen Untergrund. Beim Aufsprühen entsteht durch die Klebrigkeit kein Materialverlust, wie z.B. beim Spritzbeton.

Das Material kann an Ort und Stelle gemischt werden und ist dadurch an die Form des Untergrundes anpassungsfähig. Es kann z.B. im Stegbereich der Schienen, entlang der Oberflächenstruktur im Dammbereich (grobe Schüttung) usw. aufgebracht werden. Außerdem kann an besonderen Lärmschwerpunkten, wie in Kurvenbereich der Bahnen und auf Dammflächen nahe von Wohnsiedlungen, die Dicke und damit Lärmabsorption optimiert werden. Aber auch das Applizieren auf einer grobmaschigen Trägermatte ist möglich.

So vorgefertigte Massen erscheinen, vor allem im Einsatz bei Einsenbahnbrückenkonstruktionen, unerläßlich. Als Trägermatten werden nicht korrosionsempfindliche Kunststoffgewebematten eingesetzt.

Die unübliche Mechanik der im ausgehärteten Zustand teigartigen Bindemittel ermöglicht das problemlose Nachverdichten auf der Schotterbettung im Schienenbereich. Das Material wird durch die Stampfbohlen nur im örtlichen Bereich durchstanzt und zerstört. Durch die Bindemitteleingenschaften kann der Verbund zwischen Korn und Korn teilweise gelöst werden. Es verbleiben lose Einzelkörner, die das Durchfließen von Wasser im Dammbereich nicht hindern. Diese Eingenschaft ist auch beim Auswechseln der Dammkonstruktion vorteilhaft. Das Gemisch kann einfach abgeschält, problemlos durch Zerreißen des Bindemittelfilms in Einzelkörner getrennt, wieder mit Bindemittel umhüllt und anschließen aufgesprüht werden.

Die plastoelastischen Eigenschaften, zusammen mit dem hohen Hohlraumgehalt, ergeben eine Frostbeständigkeit, geprüft in 250 Frost-Tauwechselperioden, ohne Substanzzerstörung.

Gegenüber den bisher verwendeten Materialien ergibt der zähteigige Zustand eine ungleich höhere schalldämmende Wirkung.

Es hat sich im Laufe der durchgeführten Untersuchungen herausgestellt, daß die Einhaltung mehrerer Kunststoffparameter zur Erzielung der gewünschten Wirkung notwendig ist.

Erstens muß die Temperatur $T_{\lambda max}$, bestimmt nach DIN 53 445, das ist jene, im (dynamischen) Torsionsschwingungsversuch ermittelte Temperatur, bei welcher das logarithmische Dekrement der Torsionsschwingungsdämpfung ein Maximum erreicht, in allen Fällen kleiner als -50°C sein, da dieser Parameter entscheidend für die Beibehaltung des plastoelastischen Effektes des erhärteten Endproduktes bei niedrigen Temperaturen unter -20°C ist.

Der erforderliche Plastoelastizitätsbereich wird aber dadurch noch nicht ausreichend gekennzeichnet. Nach Reihenuntersuchungen wurde eine reproduzierbare Methode entwickelt, die eine Auswahl der erfindungsgemäß zwingend notwendigen Kunststoffeigenschaften und damit auch eine Abgrenzung zu anderen Kunststoffen zuläßt. Es handelt sich um die Bestimmung der Zug- und Reißdehnung sowie des Rückstellverhaltens der verwendeten Kunststoffe sowie ihrer Mischungen mit Zement, die in spezieller, teilweise gegenüber der DIN-Norm geänderter Weise bestimmt werden. Die so erhaltenen Werte für Reiß- und Restdehnung müssen den eingangs genannten Bedingungen entsprechen.

Als Versuchsmaterial für die neuentwickelten Prüfmethoden diente

1) eine wässerige Acrylharzdisperion "CHEMCO C" (Reichhold RCI, Wien) mit einem Festkörpergehalt von 57 - 60 %, einer Viskosität von 3.000 bis 5.000 cP bei 25°C, einem pH-Wert von 7,5 bis 8,5 und einer $T_{\lambda max}$ - 65°C und zum Vergleich

2) eine wässerige Acrylharzdispersion "CHEMCO A" mit $T_{\lambda max}$ von -8°C.

Prüfalter der Probekörper: 28 Tage nach der Herstellung; Lagerung bei Raumtemperatur.

Probenherstellung:

Je System wurden schichtenweise Felle aus reinem Kunststoff und aus einer Mischung aus Kunststoff und Einheitszement PZ 375, Werk Kirchbichl, im Verhältnis 1:1, in einer Dicke von 2 mm hergestellt.

Das Mischungsverhältnis 1:1 nach Gewicht gilt für die Kunststoffdispersion mit einem Feststoffgehalt von 58 Gew.-% (± 2 %).

Bei anderen Dispersions-Feststoffgehalten ist die Mischung so abzuwandeln, daß der Feststoffgehalt, im Verhältnis zur hydraulischen Komponente, entsprechend diesen Angaben eingehalten wird.

Versuchsdurchführung:

Zugversuch bei +23°C:

Die Zugversuche wurden nach DIN 53 455 mit Probekörper 3 und einer Prüfgeschwindigkeit von 100 mm/min durchgeführt. Nur beim Kunststoff entsprechend der Erfindung, ohne Zusatz, mußte ein verkürzter Probekörper (50 x 10 x 2 mm) zum Einsatz kommen, da sehr hohe Reißdehnungen auftraten. Die Einspannlänge betrug daher in diesem Fall 10 mm.

Zugversuch bei -20°C:

Die Versuche wurden in einer Temperierkammer durchgeführt. Prüfbedingungen wie bei obigen Zugversuchen.

Rückstellverhalten bei +23°C:

Zur Erfassung des Rückstellverhaltens wurden Zugproben nach DIN 53 455, Probekörper 3, ausgestanzt, bis zu 50 % der ursprünglichen Reißdehnung in einer Zugprüfmaschine gedehnt (Dehngeschwindigkeit 100 mm/min) und nach Erreichen der Dehngrenze 1 Stunde bei dieser Dehnung belassen. Danach wurden sie ausgespannt und auf einer mit Talkum bestäubten Glasplatte gelagert. Die Rückstellung der Proben wurde nach 1 Stunde und nach 24 Stunden vermessen. (Meßlänge $L_o$ = 50 mm)

Rückstellverhalten bei -20°C:

Die Versuche wurden in einer Klimakammer durchgeführt. Prüfbedingungen wie bei obigen Rückstellversuchen.

ERGEBNISSE:

ZUGVERSUCHE:

| Probenbe-zeichnung Material | ohne Zusatz | | Mischung 1:1 Zement | |
|---|---|---|---|---|
| | Reiß-festigkeit N/mm² | Reiß--dehnung % | Reiß-festigkeit N/mm² | Reiß--dehnung % |
| Zugversuche bei + 23°C | | | | |
| 1 | 0,009 | ca.4.000 | 0,162 | 225 |
| 2 | 2,58 | 430 | 2,76 | 27 |
| Zugversuche bei -20°C | | | | |
| 1 | 0,79 | ca.1.600 | 2,0 | 165 |
| 2 | 23,0 | ca. 5 | 17,5 | 5 |

ERGEBNISSE:

RÜCKSTELLVERHALTEN:

| Probenbe-<br>zeichnung<br>Material | ohne Zusatz | | Mischung 1:1 Zement | |
|---|---|---|---|---|
| | RESTDEHNUNG in % | | | |
| | $1^h$ | $24^h$ | $1^h$ | $24^h$ |
| | Rückstellverhalten bei +23°C | | | |
| 1 | 1.000 | 940 | 24 | 22 |
| 2 | 16 | 8 | 4 | 4 |
| | Rückstellverhalten bei -20° | | | |
| 1 | 290 | 180 | 35 | 23 |
| 2 | wurde nicht geprüft, da Reißdehnung zu gering (5 %) | | | |

Nach systematischen Untersuchungen an unterschiedlichen Kunststoffen nach dieser Methode, immer gleichzeitig an Fellen aus reinem Kunststoff und Kunststoff plus Einheitszement im Verhältnis 1:1, waren die Prüfergebnisse reproduzierbar.

Kunststoffe, die die Werte nach 1) (± 15 % Prüfstreuung) zumindest erfüllen, sind zur Herstellung plastolastischer Massen entsprechend der Erfindung geeignet. Materialien mit geringerer Reißdehnung und Restdehnung sind für das beanspruchte System ungeeignet. Die gleichzeitige Prüfung des reinen Kunststoffilms und der Mischung Kunststoff/Zement dient auch, neben den Auswahlkriterien des plastoelastischen Verhaltens, zur Überprüfung der Zementverträglichkeit.

Es zeigt sich, daß die Kunststoffdispersion 2, deren Kunststoff ein $T_{\lambda max}$ von -8°C hat, kein ausreichend plastoelastisches Verhalten aufweist, um erfindungsgemäß als Ausgangsmaterial für Lärmschutzmassen Verwendung zu finden.

Mit einer Kunststoffdisperion mit $T_{\lambda max}$ von -65°C (=Dispersion 1) und einer zweiten Dispersion eines Kunststoffes mit $T_{\lambda max}$ - 8°C (=Dispersion 2) wurden 5 Mischungen nach den folgenden Angaben hergestellt:

MISCHUNGSVERHÄLTNISSE

| Nr. | Zement<br>$kg/m^3$ | Füller<br>$kg/m^3$ | Kunststoffdispersion 58%ig | | Zuschläge<br>$kg/m^3$ | R.G.<br>$kg/m^3$ | mechanische<br>Eigenschaften |
|---|---|---|---|---|---|---|---|
| | | | $T_{\lambda max}$, °C | $kg/m^3$ | | | |
| 1 | 140 | — | - 65 | 140 | 620 *) | 900 | 2 / 2,8 |
| 2 | 300 | — | - 65 | 140 | 620 *) | 1060 | 1,8 / 2,1 |
| 3 | 140 | — | - 65 | 140 | 1700 **) | 1980 | 1,5 / 1,8 |
| 4 | 140 | — | - 8 | 140 | 620 *) | 900 | 1,5*** |
| 5 | 140 | — | - 8 | 140 | 1700 **) | 1980 | 2,3*** |

*) Gummigranulat/Einkorn 5/8 mm
**) Betonzuschlag 5/8 mm
***) Druckfestigkeit (N/mm²)

Mischung 1:

Kunststoffdispersion und Zement werden 2 Minuten gemischt, anschließend erfolgt die Zugabe des Einkorngranulates.

Mischung 2:

Durch die hohe Zementmenge entsteht eine relativ steife Matrix, die durch Zugabe von 20 kg Wasser verflüssigt wurde. Nach dem Mischen von Zement, Kunststoffdispersion und Wasser erfoglt die Zugabe des Granulates.

Mischung 3:

An Stelle des Gummigranulates diente als Zuschlag normaler Betonzuschlag.

Mischung 4 und 5:

Mischfolge wie 1 und 3.

Die Mischungen mit der Kunststoffdispersion mit $T_{max}$ kleiner als -65°C ergeben im ausgehärteten Zustand zähteigige Konsistenz. Der Versuch, die Druckfestigkeit zu bestimmen, führt nicht zum Ziel. Daher wurde folgender Versuch durchgeführt:

Eine Prüfplatte von 20 x 20 x 4 cm wird nach der Erhärtung nach 28 Tagen auf einen starren Untergrund gelegt. Die Belastung erfolgt mittig mit einem Würfel mit 7 cm Kantenlänge und einer Auflast von 20 kg. Nach einer Wartezeit von 2 Minuten wird die Eindringtiefe gemessen, dann wird entlastet und nach weiteren 10 Minuten die Rückverformung gemessen.

Die Werte in der Tabelle bedeuten:

z.B. 2/2,8 2 cm Eindringtiefe nach Belastung,

2,8 cm Restdicke nach Rückverformung.

Bei den Mischungen 4 und 5 mit härterer Kunststoffdispersion ergibt der Belastungsversuch keine Werte. Hier wurde die Druckfestigkeit bis zum Bruch an einer Prüfplatte 20 x 20 x 4 cm ermittelt.

In den beiliegenden Zeichnungen zeigt

Fig. 1 die zur Durchführung der Schalldämmversuche gewählte Anordnung und die

Fig. 2 bis 7 stellen die Abbildungen von Frequenzmessungsergebnissen dar.

Dabei zeigt:

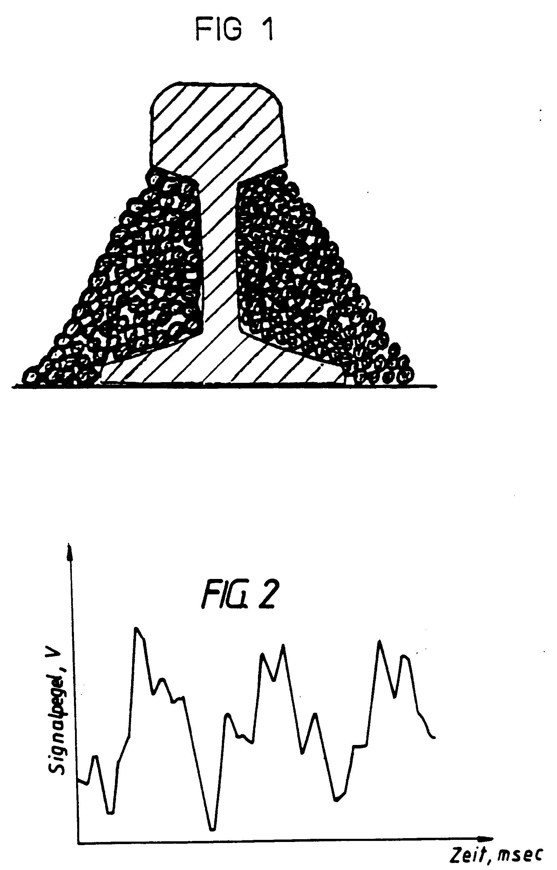

Fig. 2 den Null-Versuch, 96 dB, Frequenzverlauf gegen Zeit.

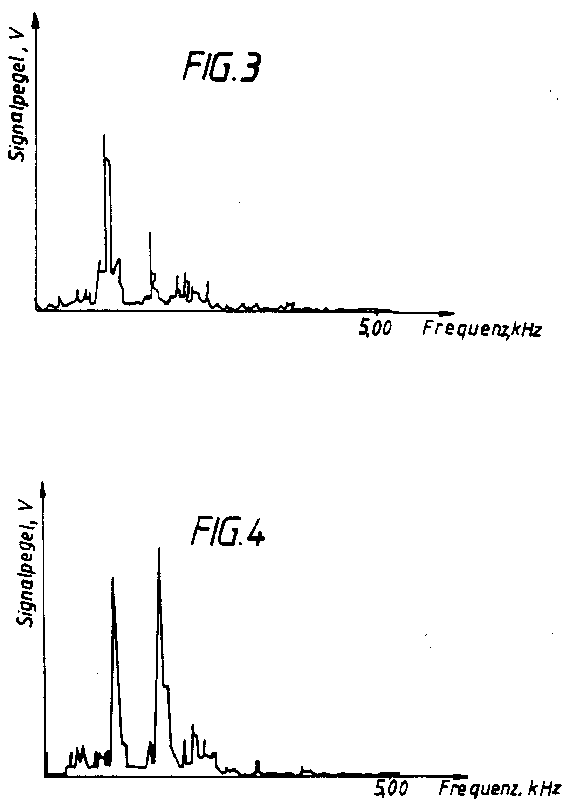

Fig. 3 den Versuch 1, 68 dB, lineare Amplitude gegen Frequenz

Fig. 4 den Versuch 2, 72 dB,       – " –

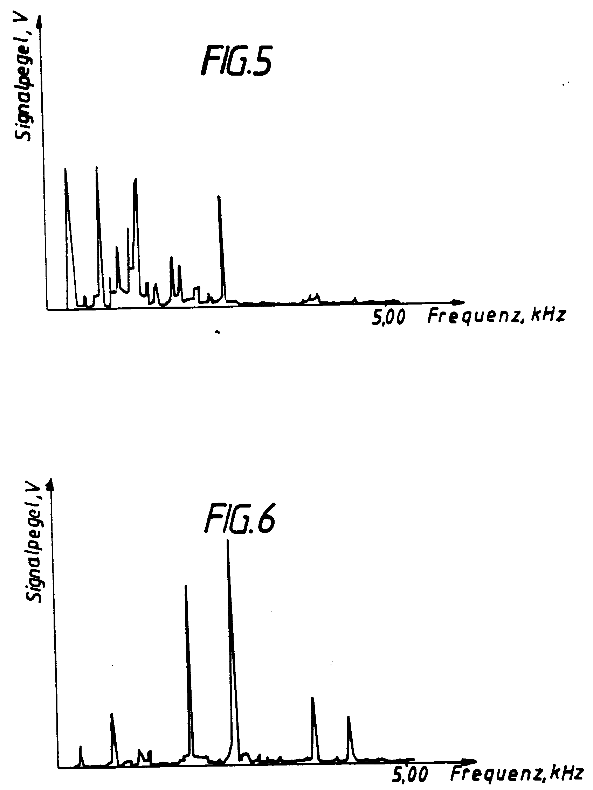

Fig. 5 den Versuch 3, 76 dB,       – " –

Fig. 6 den Versuch 4, 82 dB,       – " –

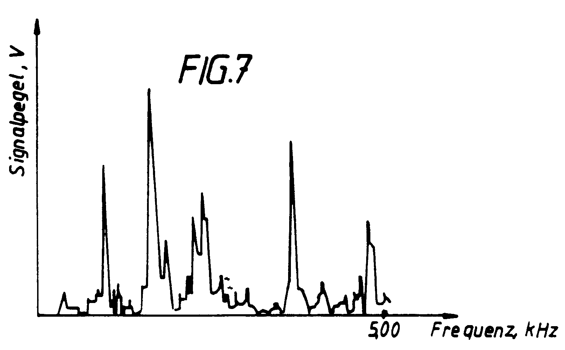

Fig. 7 den Versuch 5, 84 dB,       – " –

Die Schalldämmversuche wurden an einem 2 m langen Schienenstück vorgenommen, das entsprechend Fig. 1 mit der erfindungsgemäßen Mischung umkleidet wurde. Als Schallerreger diente ein Gewicht von 2 kg, das im freien Fall aus einer Höhe von 2,5 m auf den unbeschichteten Schienenkropf fiel.

Es wurden Messungen von Dämpfung und Frequenzänderung im Vergleich zur nicht-umkleideten, blanken Schiene vorgenommen.

Aus den beiliegenden Graphiken gemäß den Fig. 2 bis 7 ist ersichtlich, daß gegenüber dem Null-Versuch, der blanken Schiene, bei den Versuchen 1 bis 3 mit den Mischungen 1 bis 3 deutliche Lärminderung zu beobachten ist. Es tritt sowohl eine Minderung des Lärmausmaßes in dB als auch ein Filterung bestimmter unangenehm empfundener Frequenzen auf. Es sind die höheren Frequenzen, die besonders störend empfunden werden, und diese werden mit den erfindungsgemäßen Massen bevorzugt abgedämpft.

Die Versuche 4 und 5 mit den Mischungen 4 und 5 zeigen ebenfalls eine schalldämmende Wirkung, jedoch ist diese wesentlich geringer als bei den erfindungsgemäßen Massen. Außerdem werden die störenden höheren Frequenzen durch die Mischungen 4 und 5 nicht so gut ausgefiltert wie durch die Mischungen 1 bis 3.

Dabei ist noch zu beachten, daß das Tieftemperaturverhalten der Masse 4 und 5 äußerst schlecht ist.

Somit zeigt sich, daß es die erfindungsgemäße Kombination von äußerst tiefer Temperatur $T_{\lambda max}$ und den speziell ermittelten Reißdehnungs- und Rückstellungswerten ist, die die Kunststoffe für die Herstellung der erfindungsgemäßen Lärmschutzmassen so wertvoll macht. Die erfindungsgemäßen Massen ergeben nicht nur eine Lärmverminderung im allgemeinen, sondern zeigen insbesondere bei störenden Frequenzbereichen eine beträchtliche Absorption.

**Patentansprüche**

1. Mischung zur Herstellung einer Lärmschutzmasse für Gleisanlagen, dadurch gekennzeichnet, daß sie aus folgenden Komponenten besteht:

a) einer wässerigen Dispersion eines Kunststoffes mit folgenden Eigenschaften des Kunststoffilms:

- $T_{\lambda max} \leqq$ -50°C (bestimmt nach DIN 53 445)
- Reißdehnung in Anlehnung an DIN 53 455 (mit Probekörper der Dimensionen 50 x 10 x 2 mm und 10 mm Einspannlänge, Prüfgeschwindigkeit 100 mm/min)

bei + 23°C ca. 4.000 % (± 15 Rel %)

bei - 20°C ca. 1.600 % (± 15 Rel %),

in einer Mischung von 1:1 Gewichtsteilen einer etwa 58 gew.-%igen Dispersion mit Österreichischem Einheitszement 375

bei + 23°C mindestens 225 % (± 15 Rel %)

bei - 20°C mindestens 165 % (± 15 Rel %)

- Restdehnung an Prüfkörpern 3 gemäß DIN 53 455 nach Dehnung auf 50 % der ursprünglichen Reißdehnung über eine Dauer von 1 Stunde und anschließender Entlastung

bei + 23°C

1 Stunde nach Entlastung mindestens 1000% (± 15 Rel %)

24 Stunden nach Entlastung mindestens 940 (± 15 Rel %),

bei - 20°C

1 Stunde nach Entlastung mindestens 290% (± 15 Rel %)

24 Stunden nach Entlastung mindestens 180 % (± 15 Rel %),

in einer Mischung von 1:1 Gewichtsteilen einer etwa 58 gew.-%igen Dispersion mit Österreichischem Einheitszement PZ 375

bei + 23°C

1 Stunde nach Entlastung mindestens 24 % (± 15 Rel %)

24 Stunden nach Entlastung mindestens 22 % (± 15 Rel %),

bei - 20°C

1 Stunde nach Entlastung mindestens 35 % (± 15 Rel %)

24 Stunden nach Entlastung mindestens (± 15 Rel %),

b) Zement in einer Menge, bezogen auf die Trockenmasse der Kunststoffdispersion, von 1:1 bis 5:1 Gewichtsteilen,

c) einem inerten Zuschlag mit Korngrößen über 4 mm in einer Menge, daß bei Vermischung der Komponenten a - c ein Hohlraumgehalt von mindestens 12, vorzugsweise über 20 Vol.-% entsteht,

d) gegebenenfalls inerten Füllern mit einer Korngröße von maximal 1,5 mm und

e) gegebenenfalls Thixotropierhilfen an sich bekannter Art.

2. Mischung nach Anspruch 1, dadurch gekennzeichnet, daß sie als Komponente a) eine Acrylharzdispersion mit etwa 58 Gew.-% Trockenmasse enthält.

3. Mischung nach Anspruch 1 oder 2, dadurch gekennzeichnet, daß sie als Zuschlag Gummigranulat, Blähschiefer oder Blähton enthält.

4. Mischung nach einem der Ansprüche 1 bis 3, dadurch gekennzeichnet, daß sie als Füller Quarz, Kalk, Gesteinsmehl oder Feinsand enthält.

5. Verfahren zur Reduktion des Verkehrslärms von Einsenbahnen unter Anwendung einer Lärmschutzmasse, dadurch gekennzeichnet, daß eine Mischung nach einem der Ansprüche 1 bis 4 bereitet, diese Mischung an einem Ort aufgebracht wird, an welchem der Lärm vermindert werden soll, und die Mischung zu einer zähteigig bleibenden Masse mit einem Hohlraumgehalt von mindestens 12 Vol.-% ausgehärtet wird.

6. Verfahren nach Anspruch 5, dadurch gekennzeichnet, daß die Mischung im Stegbereich einer Eisenbahnschiene aufgebracht wird.

7. Dauerhaft zähteigig bleibende Lärmschutzmasse, enthältlich durch Aushärtenlassen einer Mischung nach einem der Ansprüche 1 bis 4.

**Claims**

1. A composition for producing a noise-damping mass for railway tracks, characterized in that said composition consists of the following components:

(a) an aqueous dispersion of a synthetic resin with the following characteristics of the synthetic resin in film form:

- temperature $T_{\lambda max} \leqq -50°C$, as determined by DIN 53 445,
- elongation to rupture as determined by DIN 53 445 on a test body of the dimensions 50 x 10 x 2 mm and a 10 mm clamped length at a test velocity of 100 mm/min

at + 23°C of about 4.000 % ($\pm$ 15 Rel %) and

at - 20°C of about 1.600 % ($\pm$ 15 Rel %),

and having in a mixture of 1:1 parts by weight of a 58 % by weight dispersion with Austrian standard cement 375

at + 23°C of at least 225 % ($\pm$ 15 Rel %) and

at - 20°C of at least 165 % ($\pm$ 15 Rel %),

- a residual elongation on test bodies 3 according to DIN 53 455 after elongation to 50 % of the original elongation to rupture over a period of one hour and subsequent relief,

at + 23 ° C,

1 hour after relief of at least 1.000 % ($\pm$ 15 Rel %) and

24 hours after relief of at least 940 % ($\pm$ 15 Rel %) and

at - 20°C,

1 hour after relief at least 290 % ($\pm$ 15 Rel %) and

24 hours after relief of at least 180 % ($\pm$ 15 Rel %),

and having for a mixture of 1:1 parts by weight of a 58 weight % dispersion with the Austrian standard cement 375

at + 23°C,

1 hour after relief, at least 24 % ($\pm$ 15 Rel %) and

24 hours after relief at least 22 % ($\pm$ 15 Rel %) and

at - 20°C,

1 hour after relief at least 35 % ($\pm$ 15 Rel %) and

24 hours relief at least 23 % ($\pm$ 15 Rel %);

(b) a hydraulic cement in an amount of 1:1 to 5:1 parts by weight with respect to the dry mass of the synthetic resin dispersion;

(c) an inert aggregate with a particle size in excess of 4 mm in an amount which, upon mixture of the components (a) - (c) results in a hollow interstitial space volume of at least 12, preferably above 20 volume %;

(d) optionally inert fillers with a particle size of a maximum of 1,5 mm; and

(e) optionally at least one thixotropifying agent.

2. The composition defined in claim 1, characterized by containing an acrylic acid dispersion with a dry content of about 58 % by weight as said component (a).

3. The composition defined in claim 1 or 2, characterized by containg rubber granules, expanded shale or expanded clay as said aggregate.

4. The composition of any of claims 1 to 3, characterized by containing quartz, limestone, stone meal or fine sand as said filler.

5. A method of reducing the railway traffic noise by using a noise-damping composition, characterized by preparing a composition in accordance with any of claims 1 to 4, applying said composition to a site at which noise is to be attenuated and causing said composition to set to a permanently viscoelastic mass having a free volume of at least 12 volume %.

6. The method of claim 5, characterized by applying the composition against the stem of a railway rail.

7. Permanently viscoelastic remaining sound-damping composition, obtainable by allowing a composition according to any of claims 1 to 4 to set.

**Revendications**

1. Mélange pour la fabrication d'une masse d'insonorisation pour voies ferrées, caractérisé en ce qu'il est constitué par les composants suivants:

a) une dispersion aqueuse d'une matière plastique dont le film possède les propriétés suivantes:

- $T_{\lambda max} \leqq - 50°C$, déterminée selon DIN 53 445
- Elongation à la rupture conformément à DIN 53 455 (avec des éprouvettes de dimensions 50 x 10 x 2 mm et une longueur libre entre mâchoires de 10 mm, vitesse d'essai 100 mm/min) qui est d'au moins 4.000 % (± 15 % rel.) à + 23°C

d'au moins 1.600 % (± 15 % rel.) à - 20°C

dans un mélange de 1:1 parties en poids d'une dispersion sion à environ 58 % en poids avec du ciment standard autrichien 375

d'au moins 225 % (± 15 % rel.) à + 23°C

d'au moins 165 % (± 15 % rel.) à - 20° C

- Allongement permanent des éprouvettes 3 selon DIN 53 455 après allongement de 50 % de l'élongation à la rupture d'origine sur une durée d'une heure et ensuite retrait de la sollicitation

à + 23°C

d'au moins 1.000 % (± 15 % rel.) 1 heure après décharge

d'au moins 940 % (± 15 % rel.) 24 heures après décharge,

à - 20°C

d'au moins 290 % (± 15 % rel.) 1 heure après décharge

d'au moins 180 % (± 15 % rel.) 24 heures après décharge,

dans un mélange de 1:1 parties en poids d'une dispersion d'environ 58 % en poids avec un ciment standard autrichien PZ 375

à + 23°C

d'au moins 24 % (± 15 % rel.) 1 heure après décharge

d'au moins 22 % (± 15 % rel.) 24 heures après décharge,

à - 20°C

d'au moins 35 % (± 15 % rel.) 1 heure après décharge

d'au moins 23 % (± 15 % rel.) 24 heures après décharge,

b) un ciment selon une quantité, rapportée à la masse sèche de la dispersion de matière plastique, comprise entre 1:1 et 5:1,

c) un agrégat inerte de granulométrie supérieure à 4 mm, selon laquelle, par mélange des composants a - c, résulte une quantité de vides d'au moins 12 et de préférence de plus de 20 parties en volume,

d) éventuellement des charges inertes d'une granulométrie maximale de 1,5 mm, et

e) éventuellement des auxiliaires favorisant la thixotropie de type connu en soi.

2. Mélange selon la revendication 1, caractérisé en ce qu'il comprend en tant que composant a) une dispersion de résine acrylique avec une masse sèche d'environ 58 % en poids.

3. Mélange selon la revendication 1 ou 2, caractérisé en ce qu'il contient en tant qu'agrégat un granulat caoutchouteux, du schiste expansé ou de l'argile expansée.

4. Mélange selon l'une des revendications 1 a 3, caractérisé en ce qu'il contient en tant que charge du quartz, de la chaux, de la poudre de roches ou du sable fin.

5. Procédé pour la réduction du bruit provoqué par le trafic sur les voies ferrées en utilisant une masse d'insonorisation, caractérisé en ce que l'on prépare un mélange selon l'une quelconque des revendications 1 à 4, on applique ce mélange en un endroit ou le bruit doit être réduit, et on laisse le mélange durcir jusqu'à une masse restant pâteuse et tenace avec une teneur en vides d'au moins 12 % en volume.

6. Procédé selon la revendication 5, caractérisé en ce que le mélange est appliqué dans la zone de l'âme d'un rail de voie ferrée.

7. Masse d'insonorisation durablement pâteuse et tenace, obtenue en laissant durcir un mélange selon l'une des revendications 1 à 4.

# FIG 1

# FIG 2

*Signalpegel, V*

*Zeit, msec*

FIG.3

FIG.4

FIG.5

Signalpegel, V

5,00    Frequenz, kHz

FIG.6

Signalpegel, V

5,00    Frequenz, kHz

FIG.7